# FASCICULE DE BREVET EUROPEEN

(11) **EP 4 454 967 B1**
(45) Date de publication et mention de la délivrance du brevet: **22.07.2026**
(21) Numéro de dépôt: 24171602.6
(22) Date de dépôt: 22.04.2024
(51) Int. Cl.: B61D 1/08, B61D 31/00, B61D 33/00, B60P 3/38

(54) **ENSEMBLE POUR UNE VOITURE DE VÉHICULE FERROVIAIRE ET VOITURE ASSOCIÉE**
ANORDNUNG FÜR EIN SCHIENENFAHRZEUG UND ENTSPRECHENDES FAHRZEUG
ASSEMBLY FOR A RAIL VEHICLE CAR AND ASSOCIATED CAR

(30) Priorité: 24.04.2023 FR 2304070
(43) Date de publication de la demande: 30.10.2024
(73) Titulaire: ALSTOM Holdings, 93400 Saint-Ouen-sur-Seine (FR)
(72) Inventeur: CORBE, Jérôme, 93400 SAINT-OUEN-SUR-SEINE (FR); NUNES, Yohan, 95150 TAVERNY (FR)
(74) Mandataire: Plasseraud IP

(56) Documents cités:
- WO-A1-2008/092382
- CN-U- 207 328 463
- CZ-U1- 18 310
- CZ-U1- 18 573
- PL-B1- 195 854

## Description

La présente invention concerne un ensemble pour un véhicule, notamment pour un véhicule ferroviaire. La présente invention concerne également une voiture pour un véhicule ferroviaire comprenant un tel ensemble.

La présente invention trouve, en particulier, applications pour des trains dits « trains de nuit ».

De tels trains de nuit comprennent communément des couchettes adaptées pour recevoir un passager en position allongée.

Il existe en particulier dans de tels trains de nuit des installations convertibles entre une position de siège et une position de couchette. Ces installations comprennent deux assises distinctes présentant chacune une surface d'assise et deux dossiers distincts associés chacun à une structure d'assise. En outre, ces installations comprennent un support dont l'une des faces est solidaire des faces arrières des deux dossiers et dont l'autre face est solidaire d'un matelas.

Toutefois, ce type d'installations est fastidieux à monter.

En outre, ce type d'installation est peu confortable et peu ergonomique pour un passager.

Un but de l'invention est de pallier les inconvénients précités en proposant un ensemble pour un véhicule ferroviaire plus simple à monter et améliorant le confort du passager.

A cet effet, l'invention a pour objet un ensemble selon la revendication 1.

Suivant d'autres aspects avantageux de l'invention, l'ensemble comprend une ou plusieurs des caractéristiques suivantes, prises isolément ou suivant toutes les combinaisons techniquement possibles :
- Le dossier est mobile en rotation par rapport à la structure d'assise entre la position de siège et la position de couchette.
- la première face du dossier présente au moins deux portions bombées, chaque portion bombée délimitant une surface d'appui de la première face du dossier, la deuxième face du dossier étant sensiblement plane.
- Cet ensemble comprend, en outre, au moins une couchette supérieure agencée au-dessus de l'unité convertible, la couchette supérieure présentant au moins une configuration déployée dans laquelle la couchette supérieure est destinée à recevoir un passager dans une position allongée.
- La couchette supérieure est mobile entre la configuration déployée et une configuration escamotée dans laquelle la couchette supérieure est inaccessible à un passager.
- La couchette supérieure est mobile en rotation entre la configuration déployée et la configuration escamotée.
- Cet ensemble comprend, en outre, au moins un appui-tête intercalé entre l'unité convertible et la couchette supérieure, au moins une portion de la couchette supérieure étant en appui sur l'appui-tête dans la configuration déployée de ladite couchette supérieure.
- Dans la configuration déployée, la couchette supérieure s'étend le long d'une direction d'extension de couchette supérieure, la direction d'extension de couchette supérieure définissant une direction le long de laquelle un passager est apte à s'allonger sur la couchette supérieure, l'appui-tête s'étendant selon une direction d'extension d'appui-tête parallèle à la direction d'extension de couchette supérieure.
- La couchette supérieure présente une largeur le long d'une direction perpendiculaire à la direction d'extension de couchette supérieure, l'appui-tête comprenant au moins une face présentant au moins une portion, dite portion de contact, configurée pour être en contact avec la couchette supérieure dans la configuration déployée de ladite couchette supérieure, une largeur d'au moins une zone de ladite portion de contact le long de la direction perpendiculaire à la direction d'extension de couchette supérieure étant supérieure ou égale à un quart de la largeur de la couchette supérieure.

L'invention a également pour objet une voiture pour un véhicule ferroviaire comprenant au moins un compartiment et un ensemble comme décrit ci-dessus, l'ensemble étant agencé dans ledit compartiment.

D'autres aspects et avantages de l'invention apparaîtront à la lecture de la description qui va suivre, donnée à titre d'exemple non limitative, est faite en référence aux dessins annexés, sur lesquels :
- [Fig. 1], la figure 1 est une représentation schématique en perspective d'un ensemble selon l'invention selon un premier mode de réalisation ; et
- [Fig. 2], la figure 2 est une représentation schématique en perspective d'un ensemble selon l'invention selon un deuxième mode de réalisation.

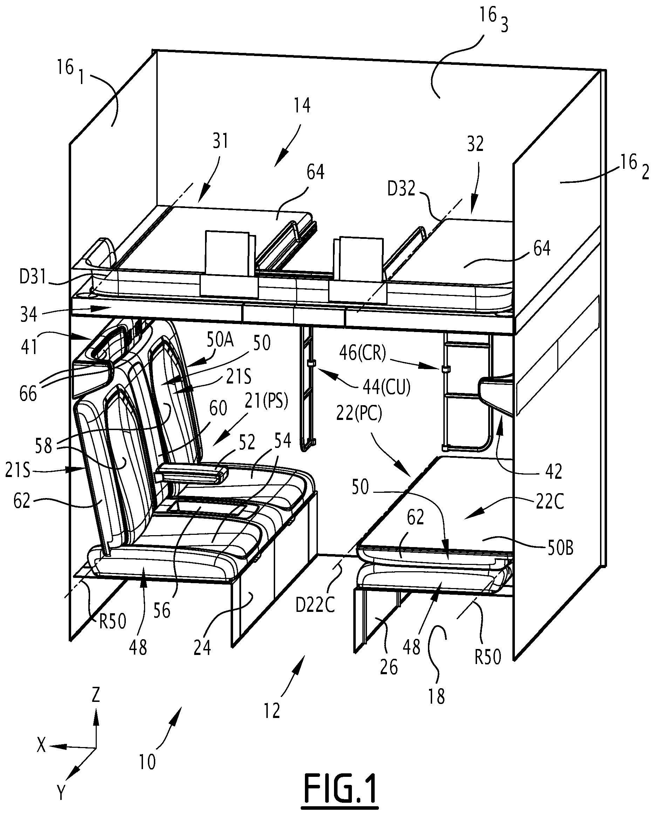

La figure 1 illustre de manière schématique et en perspective une partie d'une voiture ferroviaire 10 d'un véhicule ferroviaire.

Dans ce qui suit, il est défini une direction longitudinale X correspondant à une direction d'avancée du véhicule ferroviaire, une direction transversale Y, sensiblement perpendiculaire à la direction longitudinale X et une direction d'élévation Z, sensiblement perpendiculaire aux directions longitudinale X et transversale Y.

Dans la suite, une dimension d'un élément mesuré le long de la direction longitudinale X est appelée largeur et une dimension d'un élément mesuré le long de la direction transversale Y est appelée longueur. En outre, un élément A agencé au-dessus d'un élément B signifie que l'élément A présente une altitude plus importante que l'élément B selon la direction d'élévation Z.

La voiture ferroviaire 10, ci-après « voiture 10 », comprend au moins un compartiment 12 et un ensemble 14 agencé dans le compartiment 12.

Le compartiment 12 présente un volume intérieur délimité par au moins par quatre parois de cloisonnement et un plancher 18.

Les quatre parois de cloisonnement sont dénommées dans la suite « première paroi de cloisonnement 16₁ », « deuxième paroi de cloisonnement 16₂ », « troisième paroi de cloisonnement 16₃ » et « quatrième paroi de cloisonnement ». La quatrième paroi de cloisonnement a été omise sur la figure 1.

Les parois de cloisonnement s'étendent sensiblement selon la direction d'élévation Z.

Les parois de cloisonnement sont sensiblement perpendiculaires les unes aux autres.

La première paroi de cloisonnement 16₁ et la deuxième paroi de cloisonnement 16₂ sont sensiblement parallèles entre elles et la troisième paroi de cloisonnement 16₃ et la quatrième paroi de cloisonnement sont sensiblement parallèles entre elles.

Le plancher 18 s'étend sensiblement perpendiculairement à la direction d'élévation Z.

L'ensemble 14 comprend au moins une unité convertible et, dans cet exemple particulier, au moins une couchette supérieure agencée au-dessus de l'unité convertible, dites « unité convertible et couchette supérieure associées ». L'ensemble 14 comprend, en outre, un support d'unité convertible et un support de couchette supérieure. Optionnellement, l'ensemble comprend au moins un appui-tête et une échelle.

Dans l'exemple spécifique illustré sur la figure 1, l'ensemble comprend deux unités convertibles, nommées ci-après « première unité convertible 21 » et « deuxième unité convertible 22 », deux supports d'unité convertible, nommés ci-après « premier support d'unité convertible 24 » et « deuxième support d'unité convertible 26 », au moins deux couchettes supérieures, nommées ci-après « première couchette supérieure 31 » et « deuxième couchette supérieure 32 », deux appui-têtes, nommés ci-après « premier appui-tête 41 » et « deuxième appui-tête 42 » et deux échelles, nommées ci-après « première échelle 44 » et « deuxième échelle 46 ».

Dans l'exemple montré sur la figure 1, la première unité convertible 21 et la deuxième unité convertible 22 sont analogues.

Chaque unité convertible 21, 22 comprend une structure d'assise 48 et un dossier 50. Optionnellement, chaque unité convertible 21, 22 comprend un accoudoir central 52. En outre, chaque unité convertible 21, 22 est mobile entre une position de siège PS et une position de couchette PC.

Dans la position de siège PS, chaque unité convertible 21, 22 délimite au moins deux sièges. Sur la figure 1, la première unité convertible 21 est représentée dans la position de siège PS et délimite deux sièges 21S.

Dans la position de couchette PC, chaque unité convertible 21, 22 délimite une couchette, dite « couchette inférieure ». Dans l'exemple particulier décrit dans la présente demande, dans la position de couchette PC, la première unité convertible 21 définit une première couchette inférieure (non visible sur la figure 1) et la deuxième unité convertible 22 définit une deuxième couchette inférieure 22C, visible sur la figure 1.

La structure d'assise 48 présente au moins deux surfaces d'assise 54 et une zone d'accueil 56 de l'accoudoir central 52 dans la position de couchette PC.

Dans l'exemple illustrée sur la figure 1, les surfaces d'assise 54 sont séparées l'une de l'autre selon la direction transversale Y. En d'autres termes, les surfaces d'assise 54 sont distinctes.

Par exemple, les surfaces d'assise 54 sont séparées l'une de l'autre par la zone d'accueil 56 de l'accoudoir central 52.

Chaque surface d'assise 54 présente, dans l'exemple illustré sur la figure 1, une forme en creux.

Pour chaque unité convertible 21, 22, la zone d'accueil 56 est une zone en creux ménagée dans la structure d'assise 48 de cette unité convertible 21, 22.

La zone d'accueil 56 présente une forme complémentaire de l'accoudoir central 52 de sorte à loger l'accoudoir central 52 en position de couchette PC de l'unité convertible 21, 22 correspondante.

Optionnellement, la structure d'assise 48 de chaque unité convertible 21, 22 comprend une console centrale (non représentée sur les figures) agencée entre les deux surfaces d'assise 54.

Avantageusement, la structure d'assise 48 se présente sous la forme d'une seule pièce.

Pour chaque unité convertible 21, 22, le dossier 50 présente une première face 50A et une deuxième face 50B opposée à la première face 50A.

La première face 50A et la deuxième face 50B présentent des formes distinctes.

La première face 50A présente, pour chaque surface d'assise 54, une surface d'appui 58 pour un dos d'un passager. Optionnellement, la première face 50A présente une surface de fixation 60 de l'accoudoir central 52.

Chaque surface d'appui 58 est destinée à recevoir au moins une partie d'un dos d'un passager assis sur la surface d'assise 54 associée.

A titre d'illustration, pour chaque dossier 50, les surfaces d'appui 58 sont alignées selon la direction transversale Y.

Les surfaces d'appui 58 sont séparées l'une de l'autre. Dans l'exemple spécifique montré sur la figure 1, le dossier 50 présente deux surfaces d'appui 58 séparées l'une de l'autre par la surface de fixation 60 de l'accoudoir central 52.

Avantageusement, chaque surface d'appui 58 présente une forme complémentaire de la surface d'assise 54 associée.

Dans le cas d'espèce, chaque surface d'appui 58 présente au moins partiellement une forme bombée.

La surface de fixation 60 de l'accoudoir central 52 est agencée entre les deux surfaces d'appui 58 et destinée à recevoir l'accoudoir central 52.

Pour chaque unité convertible 21, 22, la deuxième face 50B du dossier 50 est sensiblement plane et présente une forme distincte de la première face 50A du dossier 50.

Pour chaque unité convertible 21, 22, la deuxième face 50B du dossier 50 est destinée à recevoir un passager dans la position allongée dans la position de couchette PC de cette unité convertible 21, 22.

Pour chaque unité convertible 21, 22, le dossier 50 comprend un matelas 62.

Avantageusement, il n'y a aucune structure intermédiaire autre que le matelas 62 entre la première face 50A et la deuxième face 50B du dossier 50. En d'autres termes, seul le matelas 62 forme la première face 50A et la deuxième face 50B du dossier 50.

Pour chaque unité convertible 21, 22, le dossier 50 est mobile en rotation autour d'un axe de rotation R50 par rapport à la structure d'assise 48 entre la position de siège PS et la position de couchette PC de cette unité convertible 21, 22.

Avantageusement, la structure d'assise 48 et le dossier 50 sont reliés mécaniquement l'un à l'autre par un mécanisme de fixation (non visible sur les figures) autorisant la rotation du dossier 50 autour de l'axe de rotation R50 par rapport à la structure d'assise 48.

Pour chaque unité convertible 21, 22, l'accoudoir central 52 présente une surface de réception adaptée pour recevoir un coude et/ou un avant-bras d'un passager reçu l'une ou l'autre des surfaces d'assise 54.

L'accoudoir central 52 est monté pivotant sur la surface de fixation 60 de la première face 50A du dossier 50 autour d'un axe de pivotement par l'intermédiaire d'une liaison pivot. L'axe de pivotement est sensiblement parallèle, dans cet exemple, à la direction transversale Y. En particulier, chaque accoudoir central 52 est monté pivotant autour de l'axe de pivotement par rapport à la première face 50A du dossier 50 entre une position d'accoudoir et une position rétractée.

Dans la position d'accoudoir, la surface de réception de l'accoudoir central 52 est configurée pour recevoir le coude et/ou l'avant-bras d'un passager. En outre, la surface de réception de l'accoudoir central 52 s'étend sensiblement perpendiculairement à la surface de fixation 60.

Chaque accoudoir central 52 est apte à être agencé dans la position d'accoudoir dans la position de siège PS de l'unité convertible 21, 22 à laquelle cet accoudoir central 52 appartient.

Dans la position repliée, la surface de réception de chaque accoudoir central 52 n'est pas configurée pour recevoir le coude et/ou l'avant-bras d'un passager. En outre, dans la position repliée, la surface de réception de chaque accoudoir central 52 est agencée contre la surface de fixation 60 du dossier 50 de l'unité convertible 21, 22 à laquelle cet accoudoir central 52 appartient.

Pour chaque unité convertible 21, 22, dans la position de siège, chaque surface d'assise 54 et la surface d'appui 58 associée à cette surface d'assise 54 délimitent entre eux au moins deux sièges. Comme montré sur la figure 1, chaque surface d'assise et la surface d'appui associée de la première unité convertible délimite un siège 21S.

Dans l'exemple illustré sur la figure 1, dans la position de siège PS, chaque surface d'assise 54 et chaque surface d'appui 58 associée forment sensiblement un angle égal à 90°.

Pour chaque unité convertible 21, 22, dans la position de couchette PC, la deuxième face 50B du dossier 50 est configurée pour recevoir un passager dans la position allongée.

Pour chaque unité convertible 21, 22, dans la position de couchette PC, la deuxième face 50B du dossier 50 de cette unité convertible 21, 22 s'étend sensiblement perpendiculairement à la direction d'élévation Z.

En particulier, dans la position de couchette PC, la deuxième face 50B du dossier 50 s'étend selon une direction d'extension de couchette inférieure. La direction d'extension de couchette inférieure définit la direction le long de laquelle un passager est apte à s'allonger sur la deuxième face 50B du dossier 50. Seule la direction d'extension de couchette inférieure D22C de la deuxième couchette inférieure 22C est visible sur la figure 1.

En outre, dans la position de couchette PC, chaque surface d'assise 54 est au moins en partie en contact avec la surface d'appui 58 associée de la première face 50A du dossier 50.

Par exemple, chaque surface d'assise 54 est entièrement en contact avec la surface d'appui 58 associée.

Avantageusement, dans la position de couchette PC, chaque surface d'appui 58 est emboîtée dans la surface d'assise 54 associée.

En outre, dans la position de couchette PC de chaque unité convertible 21, 22, l'accoudoir central 52 de cette unité convertible 21, 22 est dans la position repliée et agencé dans la zone d'accueil 56 de la structure d'assise 48 de cette unité convertible 21, 22.

Comme visible sur la figure 1, la première unité convertible 21 est agencée sur le premier support d'unité convertible 24 et la deuxième unité convertible 22 est agencée sur le deuxième support d'unité convertible 26.

Chaque support d'unité convertible 24, 26 présente sensiblement une section en forme de « L » dans un plan perpendiculaire à la direction transversale Y.

Chaque support d'unité convertible 24, 26 s'étend entre une paroi de cloisonnement correspondante 16₁, 16₂ et le plancher 18.

Comme visible dans l'exemple montré sur la figure 1, la première couchette supérieure 31 est associée à la première unité convertible 21 et la deuxième couchette 32 est associée à la deuxième unité convertible 22.

Pour chaque unité convertible 21, 22, la couchette supérieure 31, 32 associée est superposée à cette unité convertible 21, 22 selon la direction d'élévation Z.

Avantageusement, chaque couchette supérieure 31, 32 est agencée au-dessus de l'unité convertible 21, 22 associée de sorte que dans la position de siège PS de cette unité convertible 21, 22, un passager peut d'assoir sur l'une des zones d'assise 54 de l'unité convertible associée sans interférer avec la couchette supérieure 31, 32.

Chaque couchette supérieure 31, 32 présente une configuration déployée comme visible sur la figure 1. Dans l'exemple montrée sur la figure 1, chaque couchette supérieure 31, 32 est fixe.

Dans la configuration déployée, chaque couchette supérieure 31, 32 est apte à recevoir un passager dans la position allongée.

Dans la configuration déployée, chaque couchette supérieure 31, 32 s'étend le long d'une direction d'extension de couchette supérieure D31, D32. Dans le présent exemple, la direction d'extension D31, D32 de couchette supérieure 31, 32 est sensiblement parallèle à la direction transversale Y.

Chaque couchette supérieure 31, 32 comprend, au moins, un support 34 de matelas et au moins un matelas 64.

Dans l'exemple illustré sur la figure 1, le support 34 de matelas de la première couchette supérieure 31 et le support 34 de matelas de la deuxième couchette supérieure 32 sont connectés, de sorte à former un unique support 34 de matelas.

L'unique support 34 de matelas est apte à supporter à la fois les matelas 64 de la première couchette supérieure 31 et de la deuxième couchette supérieure 32.

L'unique support de couchette supérieure 34 s'étend par exemple entre la première paroi 16₁ de cloisonnement et la deuxième paroi de cloisonnement 16₂.

Pour chaque couchette supérieure 31, 32, le matelas 64 est destiné à accueillir un passager dans la position allongée.

Chaque appui-tête 41, 42 est associé à une unité convertible 21, 22 respective. En d'autres termes, pour chaque unité convertible 21, 22, l'appui-tête 41, 42 associé est destiné à fournir un appui pour la tête d'un passager assis sur chaque zone d'assise 54 de cette unité convertible 21, 22 dans la position de siège PS. Un tel appui-tête 41, 42 et une telle unité convertible 21, 22 sont nommés dans la suite « appui-tête 41, 42 et unité convertible 21, 22 associés ».

Dans l'exemple illustré sur la figure 1, le premier appui-tête 41 est associé à la première unité convertible 21 et le deuxième appui-tête 42 est associé à la deuxième unité convertible 22.

Le premier appui-tête 41 est agencé entre la première unité convertible 21 et la première couchette supérieure 31.

En particulier, le premier appui-tête 41 est fixé sur la première paroi de cloisonnement 16₁.

Le deuxième appui-tête 42 est agencé entre la deuxième unité convertible 22 et la deuxième couchette supérieure 32.

En particulier, le deuxième appui-tête 42 est fixé sur la deuxième paroi de cloisonnement 16₂.

Dans l'exemple illustré, le premier appui-tête 41 et le deuxième appui-tête 42 sont structurellement analogues.

Chaque appui-tête 41, 42 définit au moins une zone de réception 66 de la tête d'un passager assis sur une surface d'assise 54 de l'unité convertible 21, 22 associée dans la position de siège PS.

A titre d'illustration, chaque appui-tête 41, 42 comprend une unique structure rigide recouverte d'un garnissage.

La structure rigide présente par exemple en section selon un plan perpendiculaire à la direction transversale Y la forme d'un « U ».

En variante, l'appui-tête 41, 42 comprend une pluralité de structures rigides recouverte chacune par un garnissage.

La première échelle 44 et la deuxième échelle 46 sont associées à la première couchette supérieure 31, respectivement à la deuxième couchette supérieure 32.

Chaque échelle 44, 46 est montée rotative sur la troisième paroi de cloisonnement 16₃ autour de la direction d'élévation Z.

Chaque échelle 44, 46 est mobile en rotation entre une configuration utile CU et une configuration de repos CR par rapport à la couchette supérieure 31, 32 associée.

En particulier, chaque échelle 44, 46 est reliée par une liaison pivot à la troisième paroi de cloisonnement 16₃.

Dans la configuration utile, chaque échelle 44, 46 permet à un passager d'atteindre la couchette supérieure 31, 32 associée. En particulier, dans la configuration utile CU l'échelle 44, 46 s'étend sensiblement perpendiculairement à la troisième paroi de cloisonnement 16₃.

Dans la configuration de repos CR, l'échelle 44, 46 ne permet pas à un passager d'atteindre la couchette supérieure 31, 32 associée. En particulier, l'échelle 44, 46 s'étend sensiblement contre la troisième paroi de cloisonnement 16₃.

Optionnellement, l'une ou plusieurs des unités convertibles 21, 22 comprend un accoudoir convertible (non visible sur les figures).

L'accoudoir convertible est, à titre d'illustration, mobile entre une position d'accoudoir et une position de tête de lit.

Par exemple, l'accoudoir convertible est mobile en translation selon la direction d'élévation Z par rapport à la structure d'assise 48 entre la position d'accoudoir et la position tête de lit.

L'accoudoir convertible comprend, par exemple, un panneau et une surface de réception d'un coude et/ou d'un avant-bras d'un passager assis sur l'une des surfaces d'assise 54 de la structure d'assise 48 de l'unité convertible 21, 22.

Par exemple, le panneau est sensiblement plan et s'étend principalement selon la direction d'élévation Z.

A titre d'illustration, la surface de réception comprend au moins une portion d'une face supérieure du panneau.

Dans la position d'accoudoir, la surface de réception de l'accoudoir convertible est apte à recevoir le coude et/ou l'avant-bras d'un passager assis sur l'une des surfaces d'assise 54 de l'unité convertible 21, 22.

Dans la position de tête de lit, le panneau forme une tête de lit pour la couchette inférieure 22C.

Le fonctionnement de l'ensemble 14 selon l'invention est décrit dans ce qui suit.

La première unité convertible 21 et la première couchette supérieure 31 associées d'une part et la deuxième unité convertible 22 et la deuxième couchette supérieure 32 associées d'autre part ayant un fonctionnement analogue, le fonctionnement de l'ensemble 14 est décrit ci-après uniquement en référence à la première unité convertible 21 et à la première couchette supérieure 31 associée.

Initialement, comme visible sur la figure 1, la première unité convertible 21 est dans la position de siège PS et la première échelle 44 est dans la configuration utile CU.

En outre, dans cette position, les zones de réception 66 du premier appui-tête 41 associé à la première unité convertible 21 sont propres à recevoir la tête de passagers assis sur les surfaces d'assise 54 de la première unité convertible 21.

Pour positionner la première unité convertible 21 dans la position de couchette PC, le dossier 50 de la première unité convertible 21 est mis en rotation selon l'axe de rotation R50 en direction de la structure d'assise 48 jusqu'à ce que chaque surface d'appui 58 de la première face 50A du dossier 50 soit en contact avec la surface d'assise 54 correspondante de la structure d'assise 48.

Dans la position de couchette PC de la première unité convertible 21, la première unité convertible 21 délimite la première couchette inférieure et est configurée pour recevoir un passager dans la position allongée. En d'autres termes, la deuxième face 50B plane du dossier 50 est configurée pour recevoir un passager dans la position allongée.

Pour accéder à la première couchette supérieure 31, un passager emprunte la première échelle 44 dans la configuration utile CU de celle-ci.

Une fois arrivé sur la première couchette supérieure 31, le passager peut faire pivoter l'échelle 44 afin de la positionner de la configuration utile CU dans la configuration de repos CR.

Ensuite, afin de positionner de nouveau la première unité convertible 21 dans la position de siège PS, le dossier 50 de la première unité convertible 21 est mis en rotation autour de l'axe de rotation R50 dans une direction éloignant les surfaces d'appui 58 des surfaces d'assise 54 associée.

Pour descendre de la première couchette supérieure 31, le passager fait pivoter la première échelle 44 de la configuration de repos CR dans la configuration utile CU. Dans la configuration utile CU, le passager peut emprunter la première échelle 44.

L'ensemble 14 selon l'invention est particulièrement simple à monter et offre un confort accru au passager.

Le fait qu'un matelas 62 forme à la fois la première et la deuxième faces 50A, 50B du dossier 50, il n'y a qu'une seule pièce permettant de former à la fois les première et deuxième faces 50A, 50B du dossier 50. Le temps de montage de l'ensemble 14 selon l'invention est donc diminué par rapport au temps de montage de la structure selon l'état de la technique.

En outre, grâce au fait que le matelas 62 forme à la fois la première et la deuxième faces 50A, 50B du dossier 50, le dossier 50 selon l'invention est plus léger que la structure de l'état de la technique comprenant deux dossiers distincts, un support et un matelas. Il en résulte que la manipulation de l'unité convertible 21, 22 pour le passage de ladite unité convertible 21, 22 entre les positions de siège PS et de couchette PC est plus aisée pour un passager.

En outre, grâce au fait que la première et la deuxième faces 50A, 50B du dossier 50 sont formées par un matelas 62, une épaisseur du matelas 62 peut être augmenté par rapport à l'épaisseur du matelas selon l'état de la technique pour un encombrement analogue selon la direction longitudinale X.

De plus, le fait que chaque surface d'appui 58 présente une forme sensiblement complémentaire de la forme de la surface d'assise 54 associée, un contact optimal est réalisé entre chaque surface d'appui 58 et la surface d'assise 54 associée. Cela permet d'obtenir un confort optimal du passager lorsque celui-ci est allongé sur la couchette inférieure 22C.

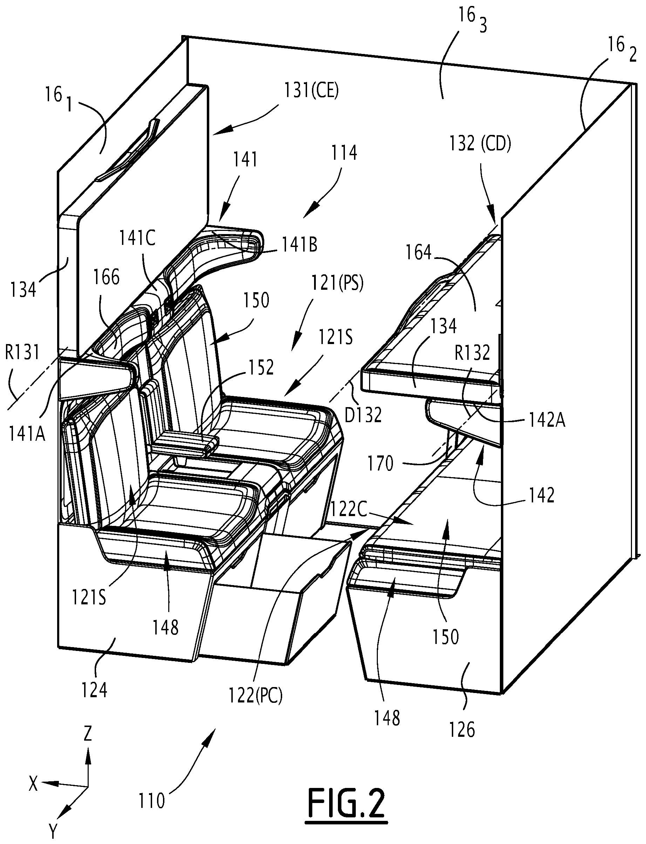

Un deuxième mode de réalisation d'une voiture de véhicule ferroviaire est décrit dans la suite en référence à la figure 2.

La voiture 110 selon le deuxième mode de réalisation est décrite uniquement par différence à la voiture 10 du premier mode de réalisation.

La voiture 110 selon le deuxième mode de réalisation diffère de la voiture 10 du premier mode de réalisation uniquement par l'ensemble.

L'ensemble 114 selon le deuxième mode de réalisation diffère de l'ensemble 14 selon le premier mode de réalisation par les supports d'unité convertible 121, 122, les couchettes supérieure 131, 132 et par chaque appui-tête 141, 142.

Ainsi, dans l'ensemble 114 selon le deuxième mode de réalisation, la première unité convertible 121 et la deuxième unité convertible 122 sont analogues à la première unité convertible 21, respectivement à la deuxième unité convertible 22 du premier mode de réalisation.

En particulier, chaque unité convertible 121, 122 comprend une structure d'assise 148 et un dossier 150 analogues à la structure d'assise 48, respectivement au dossier 50 de l'unité convertible 21, 22 du premier mode de réalisation. Optionnellement, chaque unité convertible 121, 122 comprend un accoudoir central 152 analogue à l'accoudoir central 52 décrit dans le premier mode de réalisation. En outre, chaque unité convertible 121, 122 est convertible entre une position de siège PS et une position de couchette PC.

Dans la position de siège PS, chaque unité convertible 121, 122 délimite au moins deux sièges (seuls les deux sièges 121S délimités par la première unité convertible 121 sont visibles sur la figure 2) et dans la position de couchette PC, chaque unité convertible 121, 122 délimite une couchette inférieure (seule la deuxième couchette inférieure 122C délimitée par la deuxième unité convertible 122 est visible sur la figure 2).

Chaque support d'unité convertible 124, 126 présente une forme sensiblement parallélépipédique et comprend au moins un tiroir.

Dans ce qui suit, les couchettes supérieures 131, 132 sont décrites uniquement par différence aux couchettes supérieures 31, 32 du premier mode de réalisation.

Chaque couchette supérieure 131, 132 est associée, outre à une unité convertible 121, 122 », à un appui-tête 141, 142. Chaque couchette supérieure 131, 132 et l'appui-tête 141, 142 associé sont nommés dans la suite « couchette supérieure 131, 132 et appui-tête 141, 142 associé ».

Pour chaque couchette supérieure 131, 132, cette couchette supérieure 131, 132 est agencée au-dessus de l'appui-tête 141, 142 associé.

Dans le cas d'espèce, le premier appui-tête 141 est associé à la première couchette supérieure 131 et le deuxième appui-tête 142 est associé à la deuxième couchette supérieure 132.

Chaque couchette supérieure 131, 132 est mobile en rotation selon un axe de rotation de couchette supérieure R131, R132 entre la configuration déployée CD dans laquelle elle est configurée pour recevoir un passager dans la position allongée et une configuration escamotée CE dans laquelle elle est inaccessible pour un passager.

Comme visible sur la figure 2, dans la configuration déployée CD, chaque couchette supérieure 131, 132 est agencée sur l'appui-tête 141, 142 associé. En d'autres termes, au moins une portion de chaque couchette supérieure 131, 132 est agencée en contact avec l'appui-tête 141, 142 associé.

Dans la configuration escamotée CE, chaque couchette supérieure 131, 132 est plaquée contre une paroi de cloisonnement 16₁, 16₂ correspondante. En d'autres termes, chaque couchette supérieure 131, 132 présente une direction normale sensiblement perpendiculaire à la direction d'élévation Z.

Chaque couchette supérieure 131, 132 comprend un support 134 de matelas et un matelas 164.

Par exemple, chaque couchette supérieure 131, 132 est reliée mécaniquement à l'appui-tête 141, 142 associé.

Ainsi, la première couchette supérieure 131 est par exemple reliée mécaniquement au premier appui-tête 141 et la deuxième couchette supérieure 132 est par exemple reliée mécaniquement au deuxième appui-tête 142.

Par exemple, chaque couchette supérieure 131, 132 est reliée à l'appui-tête 141, 142 associé par un système de liaison autorisant la rotation de chaque couchette supérieure 131, 132 autour de l'axe de rotation R131, R132 correspondant.

De préférence, le système de liaison autorise également une translation de de chaque couchette supérieure 131, 132 selon la direction longitudinale X, de sorte à ce que chaque couchette supérieure 131, 132 reste toujours en contact avec la paroi de cloisonnement 16₁, 16₂ correspondante.

En variante, chaque couchette supérieure 131, 132 est reliée mécaniquement à l'une des parois de cloisonnement 16₁, 16₂ correspondante. Dans ce cas, chaque couchette supérieure 131, 132 est reliée par le système de liaison à la paroi de cloisonnement correspondante 16₁, 16₂.

En outre, par exemple, l'ensemble 114 comprend un système de maintien en position de chaque couchette supérieure 131, 132 dans la configuration escamotée CE.

Les appui-têtes 141, 142 sont uniquement décrits par différence aux appui-têtes 41, 42 selon le premier mode de réalisation.

Chaque appui-tête 141, 142 est conformé pour fournir un appui à la couchette supérieure 131, 132 associée dans la configuration déployée CD.

Chaque appui-tête 141, 142 présente une face supérieure, c'est-à-dire, une face en regard de la couchette supérieure 131, 132 associée.

En outre, chaque appui-tête 141, 142 présente une direction d'extension parallèle à la direction d'extension de la couchette supérieure 131, 132 associée dans sa configuration déployée CD. Seule la direction d'extension D132 de la deuxième couchette supérieure 132 est montrée sur la figure 2. Dans le cas d'espèce, la direction d'extension de chaque couchette supérieure 131, 132 et la direction d'extension de l'appui-tête 141, 142 associée sont parallèles à la direction transversale Y.

Dans l'exemple illustré sur la figure 2, chaque appui-tête 141, 142 présente une longueur sensiblement égale à la longueur de la couchette supérieure 131, 132 associée.

Pour chaque appui-tête 141, 142, au moins une partie de la couchette supérieure 131, 132 associée dans la configuration déployée CD est en appui sur cet appui-tête 141, 142.

En particulier, chaque appui-tête 141, 142 comprend au moins une face, dite « portion de contact », configurée pour être en contact avec la couchette supérieure 131, 132 associée dans la configuration déployée CD de ladite couchette supérieure 131, 132.

Par exemple, la portion de contact correspond à au moins une portion de la face supérieure de l'appui-tête 141, 142.

La portion de contact correspond, avantageusement, à l'ensemble de la face supérieure de l'appui-tête 141, 142.

Avantageusement, une largeur d'au moins une zone de ladite portion de contact est supérieure ou égale à un quart de la largeur de la couchette supérieure 131, 132 associée, avantageusement supérieure ou égale à un tiers de la largeur de la couchette supérieure 131, 132 associée.

La ou chaque zone de la portion de contact est appelée dans la suite « zone élargie ».

La ou chaque zone élargie s'étend selon une direction perpendiculaire à la direction d'extension de la couchette supérieure 131, 132 associée. Dans le cas illustré, la ou chaque zone élargie s'étend selon la direction longitudinale X.

Par exemple, chaque appui-tête 141, 142 présente au moins une première et une deuxième zones élargies. Optionnellement, chaque appui-tête 141, 142 présente une troisième zone élargie.

Pour chaque appui-tête 141, 142, la première et la deuxième zones élargies définissent chacune une extrémité de cet appui-tête 141, 142.

La figure 2 montre la première, la deuxième et la troisième zones élargies 141A, 141B ,141C du premier appui-tête 141 et seule la première zone élargie 142A du deuxième appui-tête 142.

Chaque appui-tête comprend, pour chaque zone élargie, une portion élargie. La portion élargie correspond, par exemple, à une portion de l'appui-tête s'étendant perpendiculairement à la zone élargie correspondante, et en particulier sous la zone élargie correspondante. Plus particulièrement, la zone élargie correspondante définit la face supérieure de ladite portion élargie.

En particulier, dans le cas illustré, la première zone élargie 141A, 142 A de chaque appui-tête 141, 142 définit la face supérieure d'une première portion élargie. La deuxième zone élargie 141B, 142B de chaque appui-tête 141, 142 définit la face supérieure d'une deuxième portion élargie. La troisième zone élargie 141C, 142C de chaque appui-tête 141, 142 définit la face supérieure d'une troisième portion élargie.

Chaque appui-tête 141, 142 définit au moins une zone de réception 166 de la tête d'un passager assis. La zone de réception 166 s'étend avantageusement perpendiculairement aux zones élargies. Dans le cas illustré, la zone de réception 166 s'étend selon la direction d'élévation Z.

Pour chaque appui-tête 141, 142, la première portion élargie, la deuxième portion élargie et la troisième portion élargie délimitent avantageusement une zone de réception 166 de la tête d'un passager.

L'ensemble 114 comprend au moins une échelle déplaçable 170 configurée pour permettre à un passager de monter sur chaque couchette supérieure 131, 132.

En variante, l'ensemble 114 comprend une première échelle et une deuxième échelle analogue à la première échelle 44 et à la deuxième échelle 46 décrite dans le premier mode de réalisation.

Le fonctionnement de l'ensemble 114 selon le deuxième mode de réalisation est décrit dans la suite.

La première unité convertible 121 et la première couchette supérieure 131 associées d'une part et la deuxième unité convertible 122 et la deuxième couchette supérieure 132 associées d'autre part ayant un fonctionnement analogue, le fonctionnement de l'ensemble 114 est décrit ci-après uniquement en référence à la première unité convertible 121 et à la première couchette supérieure 131 agencée au-dessus de la première unité convertible 121.

En outre, le fonctionnement de l'ensemble 114 selon le deuxième mode de réalisation est décrit uniquement par différence au fonctionnement de l'ensemble 14 selon le premier mode de réalisation.

Lorsque la première couchette supérieure 131 est dans la configuration escamotée CE, la première couchette supérieure 131 est mise en rotation selon l'axe de rotation de couchette supérieure R131 pour positionner ladite couchette supérieure 131 dans la configuration déployée CD.

Dans la configuration déployée CD, la première couchette supérieure 131 est en appui sur le premier-appui-tête 141.

Ensuite, pour positionner de nouveau la première couchette supérieure 131 dans la configuration escamotée CE, la première couchette 131 est de nouveau mise en rotation selon l'axe de rotation de couchette supérieure R131 en direction de la première paroi de cloisonnement 16₁.

Le fait que la couchette supérieure 131, 132 soit mobile entre une configuration déployée CD et escamotée CE permet d'optimiser l'espace du compartiment du véhicule 110.

En outre, le fait que la couchette supérieure 131, 132 soit en appui contre l'appui-tête 141, 142 associé dans la configuration déployée CD de la couchette supérieure 131, 132, un support optimal de la couchette supérieure 131, 132 dans la configuration déployée CD est procuré. En particulier, l'ensemble 114 selon l'invention est plus robuste. De plus, grâce au fait que dans la configuration déployée CD la couchette supérieure 131, 132 soit en appui sur l'appui-tête associé 141, 142, cela permet d'augmenter l'épaisseur et/ou la largeur du matelas de la couchette supérieure 131, 132 sans nuire au maintien de cette couchette supérieure 131, 132. Ainsi, le confort du passager s'en trouve accru.

## Revendications

1. Ensemble (14 ; 114) pour une voiture (10 ; 110) de véhicule ferroviaire, comprenant au moins une unité convertible (21, 22 ; 121, 122), l'unité convertible (21, 22 ;121, 122) comprenant :
- une structure d'assise (48 ; 148) présentant au moins deux surfaces d'assise (54), et
- un dossier (50 ; 150) présentant une première face (50A) et une deuxième face (50B) opposée à la première face (50A), la première face (50A) et la deuxième face (50B) présentant des formes distinctes, le dossier (50 ; 150) comprenant un matelas (62), la première face (50A) présentant une surface d'appui (58) d'un dos d'un passager associée à chaque surface d'assise (54), la ou chaque surface d'appui (58) présentant une forme sensiblement complémentaire de la forme de la surface d'assise (54) associée,
l'unité convertible (21, 22 ; 121, 122) étant mobile entre une position de siège (PS) dans laquelle chaque surface d'assise (54) et la surface d'appui (58) associée délimitent entre elles un siège (21S ; 121S), et une position de couchette (PC) dans laquelle l'unité convertible (21, 22 ; 121, 122) délimite une couchette inférieure (22C ; 122C),
dans la position de couchette (PC) de l'unité convertible (21, 22 ; 121, 122), chaque surface d'assise (54) étant au moins en partie en contact avec la surface d'appui (58) associée et la deuxième face (50B) du dossier (50 ; 150) étant configurée pour recevoir un passager dans la position allongée,
**caractérisé en ce que** le matelas (62) forme à la fois la première face (50A) et la deuxième face (50B) du dossier (50).

2. Ensemble selon la revendication 1, dans lequel le dossier (50 ; 150) est mobile en rotation par rapport à la structure d'assise (48 ; 148) entre la position de siège (PS) et la position de couchette (PC).

3. Ensemble selon l'une quelconque des revendications précédentes, comprenant, en outre, au moins une couchette supérieure (31, 32 ; 131, 132) agencée au-dessus de l'unité convertible (21, 22 ; 121, 122), la couchette supérieure (31, 32 ; 131, 132) présentant au moins une configuration déployée (CD) dans laquelle la couchette supérieure (31, 32 ; 131, 132) est destinée à recevoir un passager dans une position allongée.

4. Ensemble selon la revendication 3, dans lequel la couchette supérieure (131, 132) est mobile entre la configuration déployée (CD) et une configuration escamotée (CE) dans laquelle la couchette supérieure (131, 132) est inaccessible à un passager.

5. Ensemble selon la revendication 4, dans lequel la couchette supérieure (131,132) est mobile en rotation entre la configuration déployée (CD) et la configuration escamotée (CE).

6. Ensemble selon la revendication 4 ou 5, comprenant, en outre, au moins un appui-tête (141, 142) intercalé entre l'unité convertible (121, 122) et la couchette supérieure (131, 132), au moins une portion de la couchette supérieure (131, 132) étant en appui sur l'appui-tête (141, 142) dans la configuration déployée (CD) de ladite couchette supérieure (131, 132).

7. Ensemble selon la revendication 6, dans lequel, dans la configuration déployée (CD), la couchette supérieure (131, 132) s'étend le long d'une direction d'extension de couchette supérieure (D132), la direction d'extension de couchette supérieure (D132) définissant une direction le long de laquelle un passager est apte à s'allonger sur la couchette supérieure (131, 132), l'appui-tête (141, 142) s'étendant selon une direction d'extension d'appui-tête parallèle à la direction d'extension de couchette supérieure (D132).

8. Ensemble selon la revendication 6 ou 7, dans lequel la couchette supérieure présente une largeur le long d'une direction perpendiculaire à la direction d'extension de couchette supérieure (D132), l'appui-tête (141, 142) comprenant au moins une face présentant au moins une portion, dite portion de contact, configurée pour être en contact avec la couchette supérieure (131, 132) dans la configuration déployée (CD) de ladite couchette supérieure (131, 132), une largeur d'au moins une zone (141A, 141B, 141C) de ladite portion de contact le long de la direction perpendiculaire à la direction d'extension de couchette supérieure (D132) étant supérieure ou égale à un quart de la largeur de la couchette supérieure (131, 132).

9. Voiture (10, 110) pour un véhicule ferroviaire comprenant au moins un compartiment (12) et un ensemble (14 ; 114) selon l'une quelconque des revendications précédentes, l'ensemble (14, 114) étant agencé dans ledit compartiment (12).

## Patentansprüche

1. Anordnung (14; 114) für einen Eisenbahnwagen (10; 110), die wenigstens eine umwandelbare Einheit (21, 22; 121, 122) umfasst, wobei die umwandelbare Einheit (21, 22; 121, 122) umfasst:
- eine Sitzstruktur (48; 148), die wenigstens zwei Sitzflächen (54) aufweist, und
- eine Rückenlehne (50; 150), die eine erste Seite (50A) und eine der ersten Seite (50A) gegenüberliegende zweite Seite (50B) aufweist, wobei die erste Seite (50A) und die zweite Seite (50B) unterschiedliche Formen aufweisen, wobei die Rückenlehne (50; 150) ein Polster (62) umfasst, wobei die erste Seite (50A) eine jeder Sitzfläche (54) zugeordnete Rückenstützfläche (58) für den Rücken eines Passagiers aufweist, wobei die oder jede Rückenstützfläche (58) eine Form aufweist, die im Wesentlichen komplementär zu der Form der zugehörigen Sitzfläche (54) ist,
wobei die umwandelbare Einheit (21, 22: 121, 122) zwischen einer Sitzposition (PS), in der jede Sitzfläche (54) und die zugehörige Stützfläche (58) zwischen sich einen Sitz (21S; 121S) bilden, und einer Liegeposition (PC) beweglich ist, wobei die umwandelbare Einheit (21, 22; 121, 122) einen unteren Liegeplatz (22C; 122C) begrenzt,
wobei in der Liegeposition (PC) der umwandelbaren Einheit (21, 22; 121, 122) jede Sitzfläche (54) wenigstens teilweise mit der zugehörigen Stützfläche (58) in Kontakt steht und die zweite Seite (50B) der Rückenlehne (50; 150) dazu ausgebildet ist, einen Passagier in der Liegeposition aufzunehmen,
**dadurch gekennzeichnet, dass** die Matratze (62) sowohl die erste Seite (50A) als auch die zweite Seite (50B) der Rückenlehne (50) bildet.

2. Anordnung nach Anspruch 1, wobei die Rückenlehne (50; 150) relativ zur Sitzstruktur (48; 148) zwischen der Sitzposition (PS) und der Liegeposition (PC) drehbar ist.

3. Anordnung nach einem der vorhergehenden Ansprüche, welche ferner wenigstens einen oberen Liegeplatz (31, 32: 131, 132) umfasst, der über der umwandelbaren Einheit (21, 22; 121, 122) angeordnet ist, wobei der obere Liegeplatz (31, 32; 131, 132) wenigstens eine ausgefahrene Konfiguration (CD) aufweist, in der der obere Liegeplatz (31, 32; 131, 132) dazu bestimmt ist, einen Passagier in einer liegenden Position aufzunehmen.

4. Anordnung nach Anspruch 3, wobei der obere Liegeplatz (131, 132) zwischen der ausgefahrenen Konfiguration (CD) und einer eingefahrenen Konfiguration (CE) beweglich ist, in der der obere Liegeplatz (131, 132) für einen Passagier unzugänglich ist.

5. Anordnung nach Anspruch 4, wobei der obere Liegeplatz (131, 132) zwischen der ausgefahrenen Konfiguration (CD) und der eingefahrenen Konfiguration (CE) drehbar beweglich ist.

6. Anordnung nach Anspruch 4 oder 5, welche ferner wenigstens eine Kopfstütze (141, 142) umfasst, die zwischen der umwandelbaren Einheit (121, 122) und dem oberen Liegeplatz (131, 132) angeordnet ist, wobei wenigstens ein Abschnitt des oberen Liegeplatzes (131, 132) in der ausgefahrenen Konfiguration (CD) des oberen Liegeplatzes (131, 132) auf der Kopfstütze (141, 142) aufliegt.

7. Anordnung nach Anspruch 6, wobei sich der obere Liegeplatz (131, 132) in der ausgefahrenen Konfiguration (CD) entlang einer Erstreckungsrichtung des oberen Liegeplatzes (D132) erstreckt, wobei die Erstreckungsrichtung des oberen Liegeplatzes (D132) eine Richtung definiert, entlang derer sich ein Passagier auf dem oberen Liegeplatz (131, 132) hinlegen kann, wobei sich die Kopfstütze (141, 142) in der Erstreckungsrichtung des oberen Liegeplatzes (D132) erstreckt.

8. Anordnung nach Anspruch 6 oder 7, wobei der obere Liegeplatz eine Breite entlang einer Richtung senkrecht zur Erstreckungsrichtung des oberen Liegeplatzes (D132) aufweist, wobei die Kopfstütze (141, 142) wenigstens eine Fläche umfasst, die wenigstens einen Abschnitt, den sogenannten Kontaktabschnitt, aufweist, der dazu ausgebildet ist, in der ausgefahrenen Konfiguration (CD) des oberen Liegeplatzes (131, 132) mit dem oberen Liegeplatz (131; 132) in Kontakt zu stehen, wobei eine Breite wenigstens eines Bereichs (141A, 141B, 141C) des Kontaktabschnitts entlang der Richtung senkrecht zur Erstreckungsrichtung des oberen Liegeplatzes (D132) größer oder gleich einem Viertel der Breite des oberen Liegeplatzes (131, 132) ist.

9. Wagen (10, 110) für ein Schienenfahrzeug, das wenigstens ein Abteil (12) und eine Anordnung (14; 114) nach einem der vorhergehenden Ansprüche umfasst, wobei die Anordnung (14, 114) in dem Abteil (12) angeordnet ist.

## Claims

1. Assembly (14; 114) for a rail vehicle car (10; 110), comprising at least one convertible unit (21, 22; 121, 122), the convertible unit (21, 22; 121, 122) comprising:
- a seat structure (48; 148) having at least two seat surfaces (54), and
- a backrest (50; 150) having a first face (50A) and a second face (50B) opposite the first face (50A), the first face (50A) and the second face (50B) having different shapes, the backrest (50; 150) comprising a mattress (62), the first face (50A) having a support surface (58) for a back of a passenger associated with each seat surface (54), the or each support surface (58) having a substantially complementary shape with respect to the shape of the associated seat surface (54),
the convertible unit (21, 22; 121, 122) being movable between a seat position (PS), in which each seat surface (54) and the associated support surface (58) delimit a seat (21S; 121S) between them, and a bed position (PC), in which the convertible unit (21, 22; 121, 122) delimits a lower bed (22C; 122C),
in the bed position (PC) of the convertible unit (21, 22; 121, 122), each seat surface (54) being at least partially in contact with the associated support surface (58) and the second face (50B) of the backrest (50; 150) being configured to receive a passenger in the extended position, **characterised in that** the mattress (62) forms both the first face (50A) and the second face (50B) of the backrest (50).

2. Assembly according to claim 1, wherein the backrest (50; 150) is movable in rotation relative to the seat structure (48; 148) between the seat position (PS) and the bed position (PC).

3. Assembly according to any one of the preceding claims, further comprising at least one upper bed (31, 32; 131, 132) arranged above the convertible unit (21, 22; 121, 122), the upper bed (31, 32; 131, 132) having at least one deployed configuration (CD) wherein the upper bed (31, 32; 131, 132) is intended to receive a passenger in a reclined position.

4. Assembly according to claim 3, wherein the upper bed (131, 132) is movable between the deployed configuration (CD) and a retracted configuration (CE) wherein the upper bed (131, 132) is inaccessible to a passenger.

5. Assembly according to claim 4, wherein the upper bed (131, 132) is movable in rotation between the deployed configuration (CD) and the retracted configuration (CE).

6. Assembly according to claim 4 or 5, further comprising at least one headrest (141, 142) interposed between the convertible unit (121, 122) and the upper bed (131, 132), at least a portion of the upper bed (131, 132) bearing on the headrest (141, 142) in the deployed configuration (CD) of said upper bed (131, 132).

7. Assembly according to claim 6, wherein, in the deployed configuration (CD), the upper bed (131, 132) extends in an upper bed extent direction (D132), the upper bed extent direction (D132) defining a direction wherein a passenger is able to recline on the upper bed (131, 132), the headrest (141, 142) extending in a headrest extent direction parallel to the upper bed extent direction (D132).

8. Assembly according to claim 6 or 7, wherein the upper bed has a width in a direction perpendicular to the upper bed extent direction (D132), the headrest (141, 142) comprising at least one face having at least one portion, called the contact portion, configured to be in contact with the upper bed (131, 132) in the deployed configuration (CD) of said upper bed (131, 132), a width of at least one area (141A, 141B, 141C) of said contact portion in the direction perpendicular to the upper bed extent direction (D132) being greater than or equal to a quarter of the width of the upper bed (131, 132).

9. Car (10, 110) for a rail vehicle comprising at least one compartment (12) and an assembly (14; 114) according to any one of the preceding claims, the assembly (14, 114) being arranged in said compartment (12).
